Europäisches Patentamt

European Patent Office

Office européen des brevets

(19)

(11) Veröffentlichungsnummer : **0 068 184**
**B1**

(12) **EUROPÄISCHE PATENTSCHRIFT**

(45) Veröffentlichungstag der Patentschrift :
20.02.85

(51) Int. Cl.⁴ : **B 23 K   7/02**

(21) Anmeldenummer : **82104966.5**

(22) Anmeldetag : **07.06.82**

(54) **Maschine zur Bearbeitung plattenförmiger Metallwerkstücke mit Werkzeugen.**

(30) Priorität : **29.06.81 US 278666**

(43) Veröffentlichungstag der Anmeldung :
**05.01.83 Patentblatt 83/01**

(45) Bekanntmachung des Hinweises auf die Patenterteilung : **20.02.85 Patentblatt 85/08**

(84) Benannte Vertragsstaaten :
**DE FR GB IT**

(56) Entgegenhaltungen :
**US-A- 3 717 332**
**US-A- 4 012 027**
**US-A- 4 121 808**
**US-A- 4 193 021**
**US-A- 4 255 643**

(73) Patentinhaber : **MESSER GRIESHEIM GMBH**
**Hanauer Landstrasse 330**
**D-6000 Frankfurt/Main 1 (DE)**

(72) Erfinder : **Balfanz, Fredrick J.**
**2008 Laura Lane**
**Waukesha Wisconsin 53051 (US)**

## Beschreibung

Die Erfindung betrifft eine Maschine zur Bearbeitung plattenförmiger Metallwerkstücke mit Werkzeugen, mit einem Rahmen, einem darauf entlang einer X-Achse beweglich gelagerten Schlitten, einem zur Mitnahme auf diesem Schlitten transversal angeordneten Querstück, auf diesem Querstück entlang einer Y-Achse beweglich gelagerten Metallbearbeitungsvorrichtungen, ersten und zweiten Antriebsmechanismen zum wahlweisen Verfahren dieses Schlittens und dieser Metallbearbeitungsvorrichtung entlang ihren jeweiligen Achsen, einer Halterung zur Aufnahme einer Kopierschablone, bei dieser Halterung angeordneten Schablonenfühlermitteln mit der verfolgten Kontur der Schablone entsprechender Ausgabe, einer mit den Schablonenfühlermitteln in Wirkverbindung stehender Koordinatenantriebssteuerung zur Betätigung jener Antriebsmechanismen entsprechend dieser Ausgabe.

Kopierende Metallbearbeitungsmaschinen sind schon lange im Gebrauch. Bei solchen Maschinen kann man eine mechanische Kurvenrolle für eine Schablone verwenden, die eine Reproduktion des zu schweißenden oder zu schneidenden Teils enthält, oder man kann eine optische Vorrichtung einsetzen, welche die Kante einer Teilschablone oder den Umriß einer Zeichenschablone abtastet.

So ist aus der US-A-4 012 027 eine Metallbearbeitungsmaschine gemäß dem Oberbegriff des Anspruchs 1 bekannt, bei der die Fühlerausgabe direkt mit dem Koordinatenwerkzeugantriebsmechanismus, also den X- und Y-Achsenantriebsmotoren verbunden ist, so daß das Werkstück lediglich gleichzeitig mit dem Abtastvorgang bearbeitet werden kann. Es ist weiterhin bekannt (Mitteilungen der BEFA, 24. Jahrgang, Nr. 5, Seiten 1 bis 6) Brennschneidmaschinen mit rechnergestützten Bahnsteuerungen, welche einen freiprogrammierbaren Rechner enthalten, auszurüsten. Der Vorteil einer solchen Steuerung besteht darin, daß man den Speicher des freiprogrammierbaren Rechners entweder (direkt) mit der während des Abtastens der Schablone von den Fühlermitteln und der Koordinatenantriebssteuerung kommenden Koordinatenstellungsinformation oder (indirekt) mittels eines Informationsträgers, der die Daten einer zuvor abgetasteten Kontur enthält, laden kann, wobei die Bearbeitungsmaschine unabhängig von den Fühlermitteln arbeiten kann. Bei langen Konturabmessungen reicht allerdings sehr schnell die im Rechner maximal vorhandene Speicherkapazität nicht mehr aus. Aus diesem Grund konnten in der Praxis die Vorteile derartiger Maschinen mit rechnergestützten Bahnsteuerungen nicht voll ausgenutzt werden, so daß der aus der erwähnten US-A-4 012 027 bekannte Maschinentyp nach wie vor zum Einsatz kommt.

Der Erfindung liegt die Aufgabe zugrunde, bei Bearbeitungsmaschinen der gattungsgemäßen Art die Vorteile einer rechnergestützten Bahnsteuerung mit Hilfe eines freiprogrammierbaren Rechners zu nutzen und die mit der Überlastung des Rechners verbundenen Nachteile zu vermeiden.

Diese Aufgabe wird durch die kennzeichnenden Merkmale des Anspruches 1 gelöst.

Weiterbildungen der Erfindung sind in den Unteransprüchen angegeben.

Ein Ausführungsbeispiel der Erfindung ist in der Zeichnung dargestellt und wird im folgenden näher beschrieben.

Es zeigen :

Figur 1 eine perspektivische Ansicht einer Schneidmaschine für Metallplatten,

Figur 2 ein schematisches Blockschaltbild des elektronischen Steuersystems für die Maschine nach Fig. 1,

Figur 3 eine Schemaskizze einer Schablone, aus der die Änderungen der Stellungsabtastrate entlang der Schablonenenkante ersichtlich sind,

Figur 4 eine Schemaskizze einer Schablone zur Erläuterung der Verwendung von Befehlsmarkierungen bei automatischen Änderungen der Abtastrate und

Figur 5 ein schematisches Blockschaltbild ähnlich Figur 2 einschliesslich der automatischen Vorrichtung für die Abtastrate.

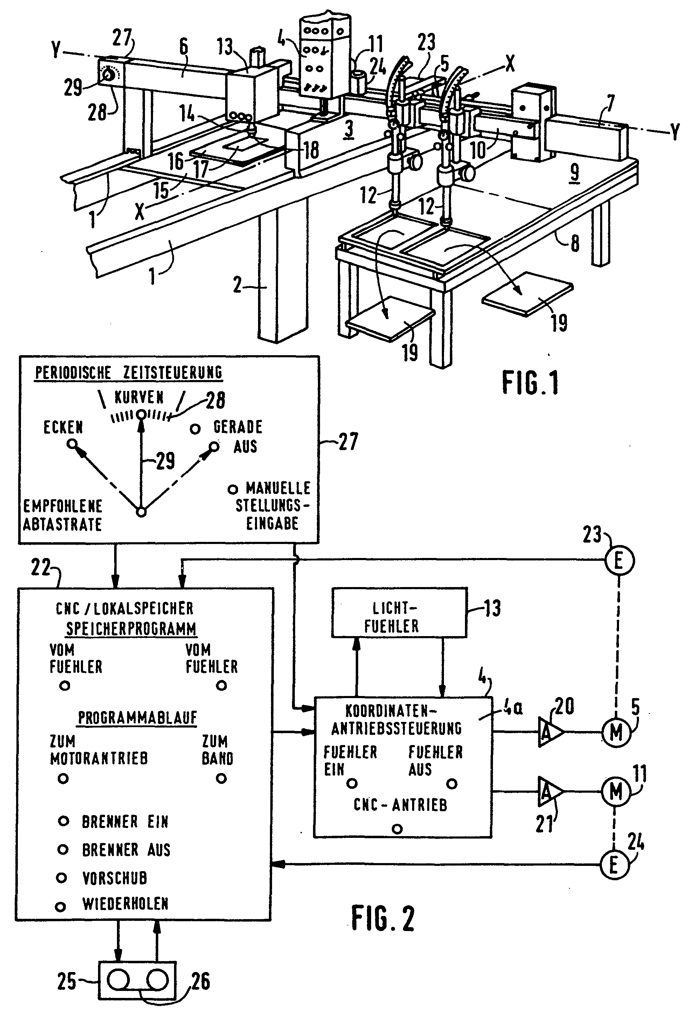

Wie aus Figur 1 der Zeichnungen ersichtlich, ist die Erfindung bei einer Metallschneidmaschine vom Auslegertyp mit fühlergesteuertem Koordinatenantrieb verwirklicht, die einen auf dem Boden stehenden Stützrahmen mit einem Paar auf Ständern 2 gelagerten Längsschienen 1 aufweist, wobei auf einer von diesen ein erster, eine Längs- oder X-Achse definierender Schlitten 3 verschieblich oder verfahrbar gelagert ist. Die Bewegung des Schlittens 3 entlang seiner Achse wird über einen Hauptschaltkasten 4 und einen X-Achsenmotor 5 gesteuert. Eine längliche Querschiene 6 ist auf einem Ende der anderen Schiene 1 verfahrbar gelagert, in ihrem Mittelabschnitt durch den Schlitten 3 abgestützt und besitzt einen freien Endteil 7, der sich weit über den Maschinenrahmen hinaus erstreckt und so über einen Schneidetisch 8 hinausragt. Der Tisch 8 steht auf dem Boden und ist zur einstellbaren Auflage eines waagerecht angeordneten, flachen plattenartigen Werkstücks 9 eingerichtet.

Ein zweiter Schlitten 10 ist verschieblich oder verfahrbar auf der Schiene 6 gelagert und definiert eine Quer- bzw. Y-Achse. Die Bewegung des Schlittens 10 entlang seiner Achse wird ebenfalls über den Schaltkasten 4 sowie einen Y-Achsenmotor 11 gesteuert.

Einer oder mehrere Metallschneidköpfe 12 (von denen hier zwei gezeigt sind) zum Schneiden des Werkstücks 9 sind einstellbar auf dem Schlitten 10 über dem Tisch 8 angebracht. Alle wohlbekannten Typen der Köpfe 12 sind dabei geeignet, wie Schneidbrenner, Plasmabrenner oder Laserstrahlerzeuger. Diese sind ebenfalls über den Schaltkasten 4 betätigbar.

Die Maschine ist zur Fühlersteuerung der Antriebsmotoren 5 bzw. 11 für die X-Achsen- bzw. Y-Achsenkoordinaten eingerichtet, z. B. durch einen Abtast- oder Fühlerkopf 13, der auf dem inneren Endteil des Schlittens 10 entfernt von den Schneidköpfen 12 fest angebracht ist. Der Kopf 13 irgendeines geeigneten, wohlbekannten Typs kann mit einem optischen Abtaster 14 und einem nicht gezeigten elektrischen Steuersystem arbeiten, um die Schlitten 3 und 10 so zu verfahren, dass die Schneidköpfe 12 den gewünschten Weg folgen, der gegebenenfalls sowohl gekrümmte als auch gerade Abschnitte umfasst.

Das Fühlersystem umfasst einen horizontalen, zwischen den Schienen 1 liegenden und mit seinen Rändern in der Längsrichtung der X-Achse verschieblich oder verfahrbar gelagerten Abtasttisch 15. Dieser dient zur Auflage eines geeigneten Typs Schablone 16 mit Markierungen, die entweder Kanten oder Striche 17 umfassen, welche die Konfiguration eines einfach oder mehrfach aus dem Werkstück 9 zu schneidenden Teils definieren. In der Abbildung hat die Schablone 16 eine Einführungs- oder Positionierungsmarke, wie am Punkt 18, welche die Anfangsstellung zum Abtasten des Stücks darstellt. Wie gezeigt, befindet sich der Punkt 18 an der rückwärtigen Ecke der Schablonenlinie 17, doch könnten die Markierungen irgendwo auf der Schablone liegen.

Bei Betätigung des Apparats erzeugt der Fühlerkopf 13 elektrische Ausgabesignale gemäss seiner Stellung bezüglich der Linie 17. Diese Signale gehen auf den Motorantrieb, um den Kopf 13 entlang der Linie zu bewegen. Bei normaler Betriebsweise veranlasst dies eine Bewegung der Schneidköpfe 12 entlang dem entsprechenden Weg, und nach Einschalten wird eine erste Gruppe gleicher, nebeneinanderliegender Teile 19 entlang seiner Vorderkante aus dem Werkstück 9 geschnitten.

Der Schaltkasten 4 enthält die übliche Koordinatenantriebsteuerung 4a zur Betätigung der Motoren 5 und 11 über geeignete Verstärker 20 bzw. 21 sowie die Stromkreise zur Steuerung des Fühlers 13 ; alle diese Einrichtungen sind in der herkömmlichen Weise ausgebildet. Ein optischer Fühler 13 und dessen Antrieb sind in U.S. Patentschrift 3 717 332 beschrieben. Vorrichtungen dieser Art sind von Canadian Westinghouse unter der Bezeichnung Modell HL10 erhältlich.

Direktes Schneiden des Werkstücks 9 mit gleichzeitigem Fühlerbetrieb kann manchmal ausreichend sein, doch muss dabei immer die richtige Schablone 16 während des Schneidens auf dem Abtasttisch 15 vorliegen.

Um das Werkstück 9 ungeachtet der Gegenwart oder Abwesenheit der Schablone 16 schneiden zu können, enthält die Maschine eine CNC (Computerized Numerical Control — Rechner-numerische Steuerung) 22, die einen programmierbaren Speicher aufweist und zum Empfang und zur Speicherung von Stellungssignalen für die X- und Y-Koordinaten aus inkrementalen, mit den Motoren 5 bzw. 11 verbundenen Rückkopplungsimpulscodierern 23, 24 angeschlossen ist. Siehe Figuren 1 und 2. Solche Codierer sind üblich, in U.S. Patentschrift 4 193 021 beschrieben und im Handel als Modell 77 von Dynamics Research Corporation erhältlich.

Die CNC selbst ist ebenfalls in üblicher Weise ausgebildet und im Handel zusammen mit Metallbearbeitungsmaschinen anderen als des hierin beschriebenen Typs von C-R-O, Inc., Menomonee Falls, Wisconsin, erhältlich. Siehe auch Patentschriften 4 121 808 und 4 255 643 bezüglich der Verwendung von numerischen Steuereinrichtungen auf einer Metallschneidmaschine.

Gemäss Figur 2 weist die CNC 22 eine wahlweise betätigbare Ausgabe aus ihrem Speicher an die Koordinatenantriebsteuerung 4a auf, damit die Motoren 5 und 11 vom Computerspeicher her unabhängig vom Fühler 13 angetrieben werden können.

Der Computerspeicher lässt sich auf verschiedene Weise programmieren. Die ursprüngliche Programmiermethode besteht darin, dass man den Fühler 13 wie oben erläutert in Verbindung mit der Schablone 16 laufen lässt, wodurch die Motoren 5 und 11 so betrieben werden, dass die X- und Y-Stellungssignale zur Ladung des Speichers in der CNC 22 über Codierer 23 und 24 durchgegeben werden. Später kann die CNC 22 dann zu gegebener Zeit, ohne dass der Fühler 13 laufen müsste, die Information aus ihrem Speicher an die Koordinatenantriebsteuerung 4a ausgeben, um dadurch die Motoren 5 und 11 so laufen zu lassen, dass das Werkstück 9 in genauer Uebereinstimmung mit dem zuvor vom Fühler abgetasteten Schablonenumriss geschnitten wird.

Zudem kann man, nachdem das gewünschte Schneidprogramm in den CNC-Speicher geladen worden ist, dieses später zur Erstellung eines Bandes zur Aufnahme und permanenten Speicherung des Programms verwenden. Dazu verbindet man ein Bandgerät 25 irgendeines wohlbekannten geeigneten Typs mit der CNC 22, so dass dieses in der üblichen Weise von der CNC her aufnehmen oder an diese abspielen kann. Als Band 26 kann dabei Papier- oder Magnetband verwendet werden.

Das anfänglich in den CNC-Speicher geladene Programm kann somit auf das Band 26 übertragen werden. Danach kann man den CNC-Speicher löschen und in Verbindung mit der Bearbeitung anderer Werkstücke einsetzen. Will man zu späterer Zeit den Teilen 19 ähnliche Stücke schneiden, so kann man das Band 26 laufen lassen, um den CNC-Speicher mit dem ursprünglichen Programm zu laden. Dies stellt die zweite Methode zum Programmieren des Speichers mit derselben Information dar. Wenn dies erfolgt ist, kann dieses Programm wie oben erläutert zur gewünschten Zeit an die Koordinatenantriebsteuerung 4a ausgegeben werden, um ähnliche Teile 19 aus dem Werkstück 9 unabhängig vom Fühler 13 zu schneiden.

Dass man stets zu Anfang den von Schablone und Fühler gesteuerten Maschinenbetrieb in den Speicher lädt, hat unter anderem den Vorteil, dass man, während sich die Information im Speicher befindet, diese aufbereiten kann, bevor sie an die Koordinatenantriebsteuerung 4a oder das Bandgerät 25 ausgegeben wird. So kann man, wie in Figur 2 gezeigt, dem CNC-Speicher noch solche Befehle wie « Brenner ein », « Brenner aus », « Vorschub » und « Wiederholen » usw. eingeben. Diese Aufbereitung kann so erfolgen, dass man direkt auf Band 26 aufzeichnet oder dies manuell nach erneuter Ladung des Grundmaterials vom Band her durchführt.

Rechnerspeicher sind begrenzt und können nur eine gegebene Menge Information speichern. Manchmal können die Teile 19 so gross sein oder eine so komplexe Konfiguration besitzen, dass der CNC-Speicher durch die ihm einzugebende Stellungsinformation überlastet wird.

Um die im CNC-Speicher zu speichernde Information zu vermindern, wird eine Digitalisierungsvorrichtung eingesetzt, welche zur Abtastung der Schablonen Umrißinformation an festgelegten, auf Abstand liegenden Stellen führt und nur die abgetastete Information in den Speicher eingibt.

Wie in Figur 2 gezeigt, ist dafür ein periodischer Zeitgeber 27, wie ein Oszillator mit veränderlicher Frequenz, an eine CNC-Eingabe angeschlossen und steht somit über die Koordinatenantriebssteuerung 4a mit dem Fühler 13 in Wirkverbindung. Während des Abtastens des Schablonenumrisses gibt der Zeitgeber 27 über die Steuerung 4a Unterbrechungssignale an den Fühler 13, so dass dieser an jeder auf Abstand liegenden Stelle anhält, wie durch die eingestellte Schwingungsfrequenz bestimmt. Die Logik des Zeitgebers 27 ist so aufgebaut, dass sie bei jeder solchen Stelle auch noch dem CNC-Speicher befiehlt, die über Codierer 23 und 24 bestimmten X- und Y-Koordinatenstellungen des Fühlers 13 zu speichern, und dann den Fühler 13 zum nächsten Halt weiterlaufen lässt. Somit wird im Speicher eine digitalisierte Reihe abgetasteter Koordinatenpunkte gespeichert.

Da die Frequenz des Zeitgebers 27 veränderlich ist, kann der Schablonenumriss mit verschiedenen Raten abgetastet werden, wie z. B. alle 3 mm, alle 17 mm, alle 25 mm usw.

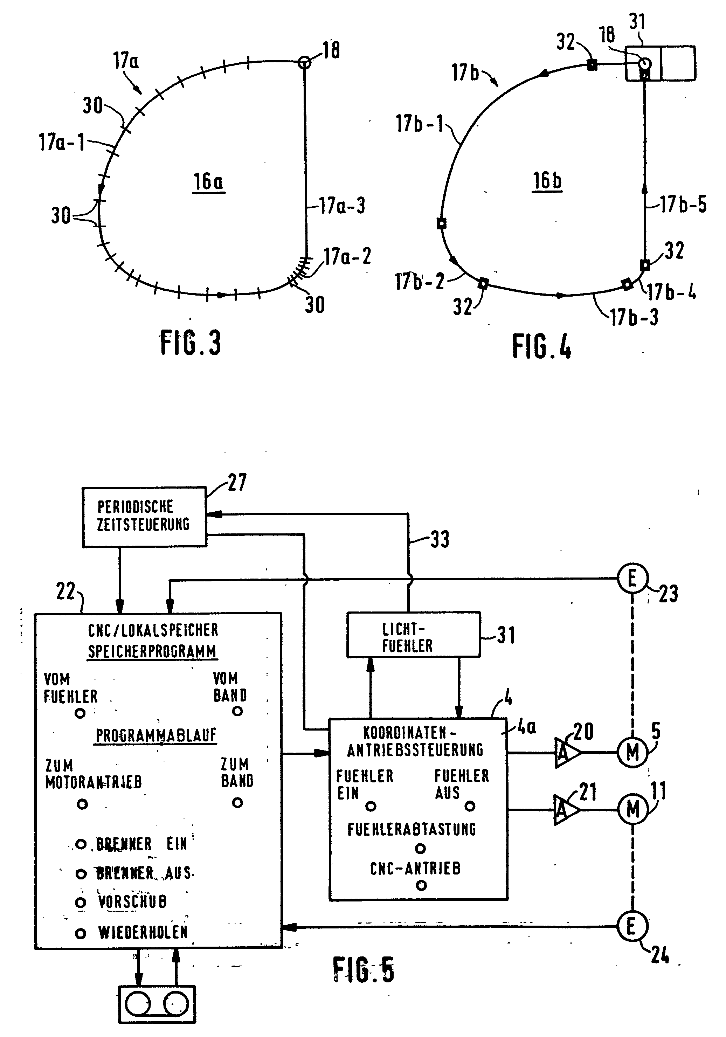

Figur 3 zeigt beispielhaft eine Schablone 16a mit einem Rand 17a, die zur Programmierung in den Speicher der CNC 22 mit dem Fühler 13 abgetastet werden soll. Der Fühler soll am vordersten Punkt 18 anfangen und entgegen dem Uhrzeigersinn umlaufen. Wie ersichtlich, besitzt der erste Teil 17a-1 des Rands eine allmähliche Krümmung, was eine mittlere Häufigkeit von X- und Y-Koordinatenabtastung erfordert. Der zweite Randteil 17a-2 besitzt eine viel schärfere Krümmung, so dass für genügende Genauigkeit eine erheblich höhere Abtasthäufigkeit nötig ist. Der dritte Randteil 17a-3 ist eine Gerade und erfordert deshalb Abtastung nur an seinem Anfang und an seinem Ende. Eine 90°-Ecke, die nicht gezeigt ist, würde die grösstmögliche Abtastrate erfordern.

Erfindungsgemäss kommen mehrere Arten veränderlicher Abtastung in Betracht.

Bei Anwendung einer manuellen Arbeitsweise wird die Zeitsteuerung 27 mit einer Rundskala 28 und einem Handknopf oder -hebel 29 versehen, der dazu dient, die Frequenzausgabe für eine Gerade, scharfe Ecken bzw. verschiedene Krümmungsgrade einzustellen. Während des Abtastens des Rands 17a in Figur 3 wird der Maschinist den Hebel 29 manuell auf etwas verschiedene, mittlere Abtastraten über den Teil 17a-1 stellen, so dass der Fühler 13 an diskreten Punkten 30 in relativ grossem Abstand anhält. Bei Annäherung des Fühlers an die Ecke 17a-2 weiss der Maschinist, dass eine höhere Abtastrate erforderlich ist, und entsprechend verstellt er den Hebel 29 selektiv auf näher zusammenliegende Haltepunkte 30. Nach Durchfahren dieser Ecke kann der Maschinist den Hebel 29 in den Bereich für eine « Gerade » stellen, da ihm bekannt ist, dass der Randteil 17a-3 eine Gerade ist. Dadurch wird die Abtastrate wirksam verringert, da Koordinatenabtastung in der Tat nur am Anfang und Ende einer Geraden erforderlich ist. Nach Erreichen des Anfangspunkts 18 kann der Maschinist die Abtastrate steigern, bis der Umriss des Teils, gegebenenfalls mit etwas Ueberlappung, geschlossen ist. Dann schaltet er den Fühler aus. Bei sehr langen Geraden könnte der Oszillator abgestellt und der Knopf für « manuelle Stellungseingabe » gelegentlich gedrückt werden, um Stellungspunkte periodisch aufzuzeichnen.

Im Endergebnis werden X- und Y-Koordinaten nicht mehr oder weniger kontinuierlich aufgezeichnet, sondern nur intermittierend an den auf Abstand liegenden Punkten 30, je nach Bedarf. Die im CNC-Speicher gespeicherte Informationsmenge wird damit stark reduziert. Durch die Möglichkeit, den Schablonenumriss auf veränderliche Weise zu digitalisieren und dabei das Abtasten entlang Geraden grosser Länge zu verringern oder anzuhalten, entfällt die Notwendigkeit einer umfangreichen Speicherbank.

Erfindungsgemäss kommt auch eine automatische Abtastweise in Betracht, die in vielen Fällen genauer als die manuelle Methode ist. Zu diesem Zweck benutzt man einen speziellen Fühlertyp 31, wie in Figur 4 und 5 gezeigt. Der Fühler 31 ist zwar allgemein dem Fühler 13 ähnlich, doch ist er ausserdem befähigt, entlang dem Rand 17b der Schablone 16b angebrachte Befehlsmarkierungen 32 wahrzunehmen. Die Markierungen 32 sind strategisch entlang dem Rand 17b am Anfang eines Kantenabschnitts, der eine andere Abtastrate erfordert, angeordnet. Die Randabschnitte 17b-1 bis 17b-5 erfordern dabei jeweils eine andere Abtastrate als der direkt vorausgehende Randabschnitt. Zum Beispiel erfordern die Randabschnitte 17b-1 und 17b-3 eine niedrigere Abtastrate. Die Randabschnitte 17b-2 und 17b-4 benötigen eine höhere Frequenz, während für 17b-4 eine sehr hohe Frequenz erforderlich ist. Da der Endabschnitt 17b-5 eine Gerade ist, ist dabei Abtastung wiederum nur an seinem Anfang und Ende nötig.

Auf Befehlsmarkierungen ansprechende Fühler, um ein zur Betätigung einer beliebigen Vorrichtung geeignetes Ausgabesignal zu liefern, sind bereits bekannt. Solche Fühler werden von Westinghouse Canada Ltd. unter dem Warenzeichen « Linatrol » Modell HL-7 vertrieben, welche mittels einer Steckkarte die Markierungen auf einer Schablone zur automatischen Steuerung des Maschinenbetriebs, wie Geschwindigkeit, Werkzeug ein/aus, Stanzmarken usw., auslesen können.

Das Schaltbild in Figur 5 ist ähnlich wie in Figur 2, ausser dass hier keine Rundskala 28 vorhanden ist. Stattdessen besteht eine Rückkopplung zwischen dem Fühler 31 und der veränderlichen periodischen Zeitsteuerung 27, z. B. über Leitung 33. Demnach liefert der Fühler 31 beim Erreichen einer Befehlsmarkierung 32 ein Ausgabesignal, das bei der Steuerung 27 empfangen wird, um deren Frequenz und folglich die Stellungsabtastrate des Fühlers automatisch zu ändern, wie mit Bezug auf Figur 2 und 3 beschrieben.

Die erfindungsgemässe Vorrichtung stellt eine erhebliche Verbesserung an kopierenden Maschinen zur Werkzeugbearbeitung von Metallwerkstücken dar. Der Maschinist kann nun nach Wunsch die Maschine gemäss einem direkt durch den Fühler programmierten oder durch ein zuvor von dem direkt programmierten Speicher aufgenommenes Band programmierten CNC-Speicher betreiben. Zudem gestattet die Vorrichtung eine variable Abtastrate entlang der Schablone, entweder unter manueller oder automatischer Steuerung, um die von dem Speicher für ein bestimmtes Teil erforderliche Information zu verringern.

**Ansprüche**

1. Maschine zur Bearbeitung plattenförmiger Metallwerkstücke mit Werkzeugen, mit
   a) einem Rahmen,
   b) einem darauf entlang einer X-Achse beweglich gelagerten Schlitten,
   c) einem zur Mitnahme auf diesem Schlitten transversal angeordneten Querstück,
   d) auf diesem Querstück entlang einer Y-Achse beweglich gelagerten Metallbearbeitungsvorrichtungen,
   e) ersten und zweiten Antriebsmechanismen zum wahlweisen Verfahren dieses Schlittens und dieser Metallbearbeitungsvorrichtungen entlang ihren jeweiligen Achsen,
   f) einer Halterung zur Aufnahme einer Kopierschablone,
   g) bei dieser Halterung angeordneten Schablonenfühlermitteln mit der verfolgten Kontur der Schablone entsprechender Ausgabe,
   h) einer mit den Schablonenfühlermitteln in Wirkverbindung stehender Koordinatenantriebssteuerung zur Betätigung jener Antriebsmechanismen entsprechend dieser Ausgabe,
gekennzeichnet durch
   i) ein rechnergesteuertes numerisches Regelsystem (CNC) (22) mit programmierbarem Speicher und

   j) eine mit jenen Antriebsmechanismen verbundene Rückkopplungseinrichtung (23, 24) mit Ausgabe an diese CNC-Steuerung (22), um den besagten Speicher mit der während des Abtastens der Schablone (16) von jenen Fühlermitteln (13) und der Koordinatenantriebssteuerung (40) kommenden Koordinatenstellungsinformation zu laden, wobei
   k) dieser Speicher eine wahlweise betätigbare Ausgabe an jene Koordinatenantriebssteuerung (40) aufweist, um die besagten Antriebsmechanismen (5, 11) in Gang zu setzen und somit jenes Werkstück (9) entsprechend der zuvor abgetasteten Kontur (17) der Schablone (16) unabhängig von jenen Fühlermitteln (13) zu bearbeiten, sowie eine mit jenen Schablonenfühlermitteln (13) in Wirkverbindung stehende Digitalisierungsvorrichtung (27), um erstere an wahlweise veränderlichen, je nach den Krümmungsverhältnissen der Schablonenkontur (17) auf Abstand liegenden, diskreten Stellen anzuhalten und die Stellungskoordinaten dieser Kontur (17) abzutasten.

2. Maschine nach Anspruch 1, gekennzeichnet durch mit dem besagten CNC-Speicher (22) verbundene Mittel zur Aufnahme und permanenten Speicherung der geladenen Koordinatenstellungsinformation, um so Löschung des geladenen Speichers zu ermöglichen.

3. Maschine nach Anspruch 2, gekennzeichnet durch Mittel zur Rückführung dieser gespeicherten Koordinatenstellungsinformation an jenen CNC-Speicher (22), um so diesen mit der abgetasteten Information über die verfolgte Kontur (17) der Schablone (16) unabhängig von den Fühlermitteln (13) zu laden.

4. Maschine nach Anspruch 1, dadurch gekennzeichnet, daß diese Digitalisierungsvorrichtung (27) eine periodische, mit jenen Schablonenfühlermitteln verbundene Zeitsteuerung mit veränderlicher Frequenz aufweist.

5. Maschine nach Anspruch 4, gekennzeichnet durch eine Vorrichtung zur manuellen Veränderung der Ausgabefrequenz dieser periodischen Zeitsteuerung (27).

6. Maschine nach Anspruch 4, gekennzeichnet durch eine Vorrichtung zur automatischen Veränderung der Ausgabefrequenz dieser periodischen Zeitsteuerung (27).

7. Maschine nach Anspruch 6, dadurch gekennzeichnet, daß diese automatische Frequenzänderungsvorrichtung aus
   a) einer jenen Schablonenfühlermitteln zugeordneten Einrichtung, die eine entlang der Schablonenkontur (17) angeordnete Befehlsmarkierung abtastet und ein Ausgangssignal liefert, und
   b) einer das Ausgangssignal von dieser Einrichtung zur Abtastung einer Befehlsmarkierung mit jener periodischen Zeitsteuerung (27) verbindenden Rückkopplungseinrichtung, um deren Ausgangsfrequenz und damit die Abtastfrequenz jener Schablonenfühlermittel zu ändern, besteht.

8. Maschine nach einem der Ansprüche 4 bis 7, dadurch gekennzeichnet, daß diese periodische Zeitsteuerung (27) einen Oszillator mit veränderlicher Frequenz enthält.

## Claims

1. A machine for tool working of plate-like metal workpieces, comprising

    a) a frame,

    b) a carriage mounted for movement on said frame along an X axis,

    c) a cross-member mounted transversely of said carriage for movement therewith,

    d) metal working means mounted for movement on said cross-member along a Y axis,

    e) first and second motive means for selectively driving said carriage and said metal working means along their respective axes,

    f) a support for receiving a template thereon,

    g) template tracing means disposed adjacent said support and having an output corresponding to the followed contour of the template,

    h) a coordinate drive control operatively connected to said template tracing means for actuating said motive means in accordance with the said output

wherein

    i) a computerized numerical control (22) having a programmable memory,

    j) and feedback means (23, 24) connected to said motive means and outputting to said computerized numerical control (22) for loading said memory with positional coordinate information originating with said tracing means (13) and coordinate drive control (40) during following of a template (16),

    k) said memory having a selectively actuatable output to said coordinate drive control (40) to actuate said motive means (5, 11) and thereby work said workpiece (9) in accordance with the previously followed contour of the template (16) and independent of said tracing means (13) and with digitizing means (27) operatively connected to said template tracing means (13) for causing the latter to stop and sample the positional coordinates of the template contour (17) at selectively variable discrete spaced points depending upon the curvature characteristics of the said contour (17).

2. The machine of claim 1 which includes : means connected to said computerized numerical control memory (22) for receiving and permanently storing said loaded positional coordinate information to thereby permit erasure of said loaded memory.

3. The machine of claim 2 which includes : means to feed said stored positional coordinate information back to said computerized numerical control memory (22) to thereby load the latter with the traced information regarding the followed contour (17) of the template (16) independent of said tracing means (13).

4. The machine of claim 1 wherein said digitizing means (27) comprises a repetitive timing control connected to said template tracing means and with said timing control having a variable frequency.

5. The machine of claim 4 which includes : means to manually vary the output frequency of said repetitive timing control (27).

6. The machine of claim 4 which includes : means to automatically vary the output frequency of said repetitive timing control (27).

7. The machine of claim 6 wherein said automatic frequency varying means comprises :

    a) means associated with said template tracing means for sensing a command mark disposed along the template contour (17), and with said command mark sensing means providing an output signal

    b) and feedback means connecting the output signal from said command mark sensing means with said repetitive timing control (27) to change the output frequency of the latter, and the resultant sampling rate of said template tracing means.

8. The machine of claims 4, 5, 6 or 7 wherein said repetitive timing control (27) comprises a variable frequency oscillator.

## Revendications

1. Machine pour usiner des pièces métalliques en forme de plaque à l'aide d'outils, avec :

    a) un châssis,

    b) un chariot monté mobile sur celui-ci suivant un axe X,

    c) une pièce transversale pour l'entraînement montée transversalement sur ce chariot,

    d) un dispositif d'usinage métallique monté mobile sur cette pièce transversale le long de l'axe Y,

    e) un premier et un second mécanisme d'entraînement pour déplacer sélectivement ce chariot et ces dispositifs d'usinage métalliques, le long de ces axes respectifs,

    f) un support pour recevoir un modèle à copier,

    g) des moyens de détection de modèle prévus sur ce support fournissant des sorties correspondant au contour suivi sur le modèle,

    h) une commande d'entraînement en coordonnées en liaison active avec les moyens de détection de modèle pour actionner un mécanisme d'entraînement respectif en fonction desdites sorties,

caractérisée en ce que :

    i) un système de réglage numérique commandé par calculateur (CNC) (22) avec une mémoire programmable et

    j) une installation de réaction (23, 24) reliée à chaque mécanisme d'entraînement avec sortie sur cette comande CNC (22) pour charger ladite mémoire avec les informations de position de coordonnées provenant de chaque moyen de détection (13) au cours de la détection du modèle (16) et de la commande de coordonnées (40), et

    k) cette mémoire fournit une sortie susceptible d'être mise en œuvre sélectivement pour chaque commande d'entraînement de coordonnées (40) pour mettre en œuvre lesdits mécanismes d'entraînement (5, 11) et ainsi usiner chaque pièce (9) en fonction du contour (17) préalablement détecté du modèle (16) indépendamment de chaque moyen de détection (13), ainsi qu'un dispositif de numérisation (27) en liaison active avec chacun des moyens de détection (13), pour arrêter les moyens d'usinage en des positions discrètes, sélectivement variables, suivant les conditions de courbure du contour du modèle (17) et situés à distance, et détecter les coordonnées de position de ce contour (17).

2. Machine selon la revendication 1, caractérisée par des moyens reliés à ladite mémoire CNC (22) pour recevoir et enregistrer de façon permanente l'information de position de coordonnées, chargé, pour permettre ainsi l'effacement de la mémoire chargée.

3. Machine selon la revendication 2, caractérisée par des moyens pour appliquer en retour cette information de position de coordonnées mise en mémoire à la mémoire CNC (22) pour charger celle-ci avec l'information détectée concernant le contour (17), suivi du modèle (16) indépendamment des moyens de détection (13).

4. Machine selon la revendication 1, caractérisée en ce que ce dispositif de numérisation (27) présente une fréquence périodique variable avec la commande de temps liée à chaque moyen de détection de modèle.

5. Machine selon la revendication 4, caractérisée par un dispositif pour modifier manuellement la fréquence de sortie de cette commande de temps (27) périodique.

6. Machine selon la revendication 4, caractérisée par un dispositif pour modifier automatiquement la fréquence de sortie de cette commande de temps (27) périodique.

7. Machine selon la revendication 6, caractérisée en ce que ce dispositif automatique de modifications de fréquence se compose :

a) d'une installation associée à chaque moyen de détection de modèle, qui détecte les repères d'ordres prévus le long du contour de modèle (17) et fournit un signal de sortie, ainsi que

b) d'une installation de réaction appliquant le signal de sortie de cette installation de détection des repères d'ordres à la commande de temps (27), périodique, pour modifier sa fréquence de sortie et ainsi la fréquence de détection de ce moyen de détection de modèle.

8. Machine selon l'une des revendications 4 à 7, caractérisée en ce que cette commande de temps (27) périodique comporte un oscillateur à fréquence variable.

**FIG.1**

**PERIODISCHE ZEITSTEUERUNG**

KURVEN — 28

ECKEN    GERADE AUS

29

EMPFOHLENE ABTASTRATE    MANUELLE STELLUNGS-EINGABE

27

**CNC/LOKALSPEICHER**
**SPEICHERPROGRAMM**

VOM FUEHLER    VOM FUEHLER

**PROGRAMMABLAUF**

ZUM MOTORANTRIEB    ZUM BAND

BRENNER EIN

BRENNER AUS

VORSCHUB

WIEDERHOLEN

22

25    26

LICHT-FUEHLER    13

**KOORDINATEN-ANTRIEBSSTEUERUNG**    4a

FUEHLER EIN    FUEHLER AUS

CNC-ANTRIEB

4

20    A

21    A

23    E

24    E

5    M

11    M

**FIG.2**

FIG.3

FIG.4

FIG.5

2